Europäisches Patentamt

European Patent Office

Office européen des brevets

(11) Publication number: **0 441 754 A1**

# (12) EUROPEAN PATENT APPLICATION

(21) Application number: **91830018.7**

(22) Date of filing: **22.01.91**

(51) Int. Cl.⁵: **B60B 33/00**

(30) Priority: **08.02.90 IT 1930490**

(43) Date of publication of application:
**14.08.91 Bulletin 91/33**

(84) Designated Contracting States:
**BE CH DE ES FR GB LI NL SE**

(71) Applicant: **Mazzoni, Ermenegildo**
**Via Faschini 10**
**I-28026 Omegna (Novara) (IT)**

(72) Inventor: **Mazzoni, Ermenegildo**
**Via Faschini 10**
**I-28026 Omegna (Novara) (IT)**

(74) Representative: **Cicogna, Franco**
**Ufficio Internazionale Brevetti Dott.Prof.**
**Franco Cicogna Via Visconti di Modrone, 14/A**
**I-20122 Milano (IT)**

(54) **Rotary supporting assembly for trucks and the like.**

(57)    The present invention relates to a rotary supporting assembly (1) for trucks and the like, which can be easily assembled, and comprises a plate (2) provided with a central sleeve (3) having an annular upward turned edge (4), which is defined by a fork member (11) for supporting the truck wheel (12).

The outward turned (4) edge of the sleeve (3) defines a seat for housing a first ball ring (20), in cooperation with a lower portion of the annular edge (10), whereas a top portion of this annular edge (10) defines a seat for housing a second ball ring (21), in cooperation with an annular rib (18) formed on the plate.

EP 0 441 754 A1

FIG. 1

# ROTARY SUPPORTING ASSEMBLY FOR TRUCKS AND THE LIKE

## BACKGROUND OF THE INVENTION

The present invention relates to a rotary supporting assembly, which can be easily and quickly assembled, and particularly designed for trucks and the like.

As is known, rotary support or wheel members which are conventionally used in trucks or the like, conventionally comprise several elements which must be coupled to one another.

More specifically, known rotary or castor wheel assemblies comprise a plate, to be affixed under the element to which the castor wheel must be applied, which plate is coupled, through the interposition of rolling rollers or bearings, to the annular edge of a fork member supporting the castor.

In order to provide this coupling, it is moreover necessary to provide a central pin which engages in the center of the mentioned plate, so as to operate as thrust block and engages with the annular edge of the fork member through a further bearing, usually of the ball type.

Thus, it is necessary to use three different elements, that is the plate, the annular edge of the fork member and the thrust block, in order to provide the desired coupling.

It should be apparent that the assembling method of these three elements is complex and expensive.

Moreover, it is necessary to have several spare elements.

Another drawback is that the thrust block or element, with its central pin, frequently causes the fork member to be disengaged from the plae, for example because of a possible breakage thereof.

## SUMMARY OF THE INVENTION

Accordingly, the aim of the present invention is to overcome the above mentioned drawbacks, by providing a rotary supporting assembly, adapted to be easily and quickly mounted, and which is specifically designed for trucks and the like, and including a very reduced number of component elements to be quickly and easily assembled.

Within the scope of the above mentioned aim, a main object of the present invention is to provide such a rotary supporting assembly, in which the central pin is firmly restrained to its supporting plate.

Another object of the present invention is to provide a rotary supporting assembly which is very reliable and safe in operation and which, moreover, can be made at a comparatively low cost.

According to one aspect of the present invention, the above mentioned aim and objects, as well as yet other objects, which will become more apparent hereinafter, are achieved by a rotary supporting assembly, specifically designed for trucks and the like, characterized in that said supporting assembly comprises a plate having a central sleeve including an annular outward turned edge, defined by a wheel supporting fork member, the outward turned edge portion of said sleeve defining a housing seat for housing a first ball ring, in cooperation with a bottom portion of the annular edge, whereas a top portion of said annular edge defines a seat for housing a second ball ring, in cooperation with a rib of said plate.

## BRIEF DESCRIPTION OF THE DRAWINGS

Further characteristics and advantages of the present invention will become more apparent from the following disclosure of a preferred, though not limitative, embodiment thereof, which is illustrated, by way of an indicative but not limitative example, in the accompanying drawings, where :

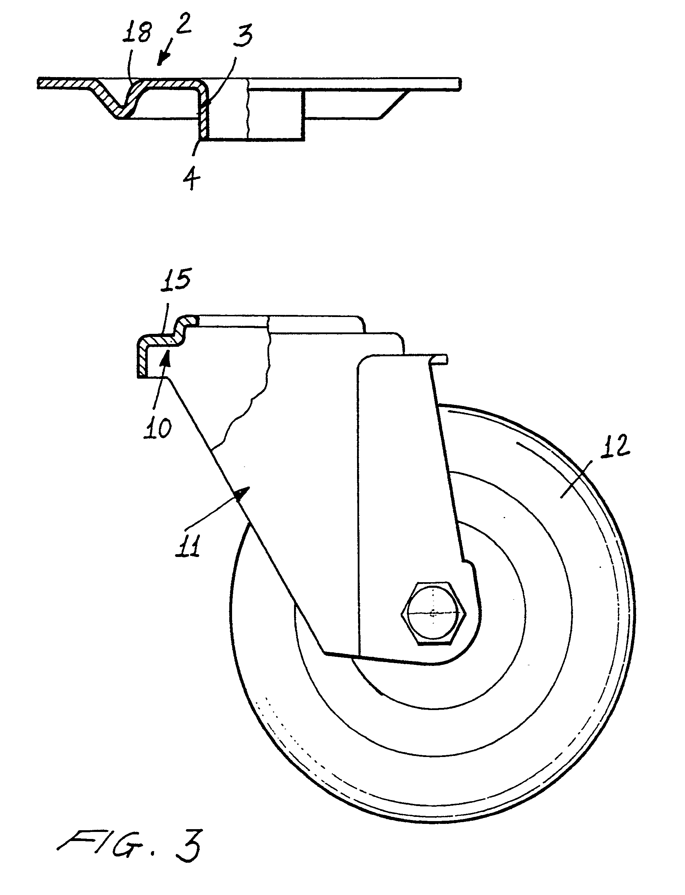

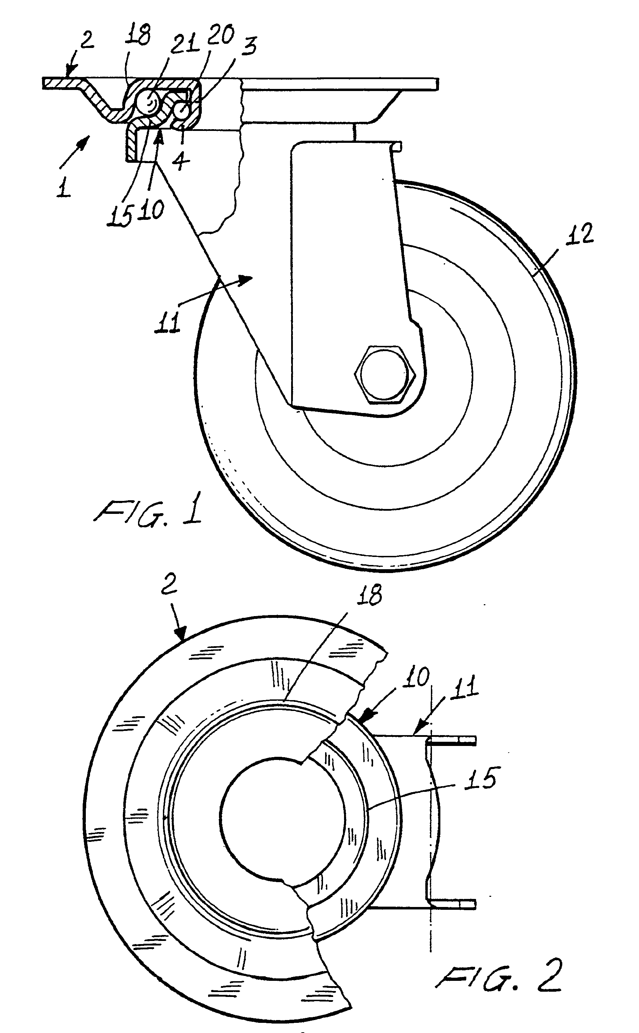

Figure 1 is a partial cross-sectioned view of the rotary supporting assembly according to the present invention ;

Figure 2 is a top partially broken away view showing the subject rotary supporting assembly ; and

Figure 3 is an exploded view showing the plate included in the subject rotary supporting assembly and further showing an annular edge portion of a fork member, by a partially cross-sectioned representation.

## DESCRIPTION OF THE PREFERRED EMBODIMENT

With reference to the figures of the accompanying drawings, the rotary supporting assembly according to the invention, which has been overally indicated at the reference number 1, comprises a plate 2 which, advantageously, has a circular shape and is provided with a central sleeve 3 which axially extends and has an outward turned free edge portion 4.

Outside of the outward turned portion 4, there is engaged an annular edge 10 of the fork member 11 supporting a wheel 12.

The annular edge 10 is so machined as to provide, in cooperation with the outward turned portion 4 and the bottom face of said annular edge, a seat or housing in which a first ball ring 20 can be engaged, so as to operate as a thrust bearing.

Correspondingly, the annular edge 10 is provided, on its outer surface, with a recessed portion 15 in which can be engaged a second ball ring 21 which, at its opposite side, is restrained by a rib 18 formed on the plate and annularly extending.

Thus, the rotary supporting assembly can be constructed by easily and simply assembling only two pieces, that is the plate and annular edge portion, since the central pin is directly formed in a single piece with said plate and, accordingly, it can not disengage from said plate, in addition to reducing the number of the component elements.

Another important feature of the present invention is that, by housing the balls in regions the edge portions of which are mechanically outward turned, a very accurate centering and safe coupling of said balls can be obtained.

While the invention has been disclosed and illustrated with reference to a preferred embodiment thereof, it should be apparent that the disclosed embodiment is susceptible to several modifications and variations all of which will come within the spirit and scope of the appended Claims.

## Claims

1. A rotary supporting assembly, specifically designed for trucks and the like, characterized in that said supporting assembly comprises a plate having a central sleeve including an annular outward turned edge, defined by a wheel supporting fork member, the outward turned edge portion of said sleeve defining a housing seat for housing a first ball ring, in cooperation with a bottom portion of the annular edge, whereas a top portion of said annular edge defines a seat for housing a second ball ring, in cooperation with a rib of said plate.

2. A rotary supporting assembly according to Claim 1, characterized in that said central sleeve has an outward turned free edge adapted to define a housing for said first ball ring.

3. A rotary supporting assembly according to Claim 1, characterized in that said annular edge is provided, on the top surface thereof, with a recess adapted to house said second ball ring.

4. A rotary supporting assembly according to Claim 1, characterized in that said rib of said plate has a substantially annular configuration.

FIG. 3

FIG. 1

FIG. 2

**European Patent Office**

## EUROPEAN SEARCH REPORT

Application Number

EP 91 83 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3300527 (HIRAI) <br> * page 5, line 18 - page 6, line 13; figures 1, 2 * | 1, 2, 3, 4 | B60B33/00 |
| X | DE-A-2156377 (METALLWARENFABRIK HALVER) <br> * page 4, line 8 - page 5, line 27; figure 1 * | 1, 2, 3, 4 | |
| Y | DE-A-3329938 (HIRAI) <br> * page 6, line 23 - page 8, line 8; figures 1, 2 * | 1, 2, 3, 4 | |
| Y | DE-A-1529671 (LYCKEABORGS) <br> * page 4, line 9 - page 5, line 16; figures 1-4 * | 1, 2, 3, 4 | |
| A | GB-A-1008925 (PEMCO) <br> * page 2, line 125 - page 5, line 40; figures 2, 4-6 * | 1, 2, 3 | |

TECHNICAL FIELDS
SEARCHED (Int. Cl.5)

B60B

The present search report has been drawn up for all claims

| Place of search | Date of completion of the search | Examiner |
|---|---|---|
| THE HAGUE | 14 MAY 1991 | AYITER I. |